# NEW EUROPEAN PATENT SPECIFICATION

(11) **EP 0 479 072 B2**
(45) Date of publication and mention of the opposition decision: **28.02.2001**
(45) Mention of the grant of the patent: 11.12.1996
(21) Application number: 91116071.1
(22) Date of filing: 20.09.1991
(51) Int. Cl.: H02K 15/095

(54) **Apparatus for automated stator winding station set up**
Geräte für eine Aufbaustation zum automatischen Wickeln eines Stators
Appareil pour une station de montage automatique de bobinage statorique

(30) Priority: 03.10.1990 US 592221
(43) Date of publication of application: 08.04.1992
(73) Proprietor: AXIS S.p.A., 50028 Tavarnelle Val di Pesa (Firenze) (IT)
(72) Inventor: Santandrea, Luciano, I-50028 Tavarnelle Val di Pesa (Firenze) (IT)
(74) Representative: Moir, Michael Christopher

(56) References cited:
- EP-A- 0 209 624
- EP-A- 0 331 906
- EP-A- 0 387 411
- EP-A- 0 478 302
- EP-A- 0 751 608
- US-A- 2 954 177

## Description

### Background Of The Invention

The present invention relates to the field of winding stator cores, such as those employed in electric motors, using winding shuttles having a reciprocatory and oscillatory motion. In particular, the present invention relates to apparatus for a winding station stator core positioning system whereby stator cores of different lengths may be wound by a winding shuttle without replacing the winding needles or other time-consuming adjustments.

Modern stator winding equipment typically includes a pair of outwardly opposed needles disposed at one end of a shuttle, through which needles coil wire is laid in turns upon the poles of a stator core. The stator core is positioned with its longitudinal axis aligned with that of the winding shuttle output shaft. The shuttle is capable of reciprocatory motion along the longitudinal axis of the stator core, whereby the needles traverse a path parallel to the longitudinal axis of the stator core, in a manner per se known. Such a winding machine is described in Luciani et al. U.S. Patent No. 4,858,835.

In presently existing machines, the stator core is positioned adjacent to the winding station with its proximal edge (i.e., that nearest the winding station) at a fixed distance, which fixed distance is independent of the stator length. When it is desired to wind a stator core of a different length, it is necessary to adjust the longitudinal stroke of the winding shuttle. Adjusting the stroke length in presently existing machines requires the operator either to change the winding needles for those of a suitable length of manually to adjust the needles to proper length, where the needles include a mechanism for varying their length. The needle replacement task requires removing the needles from the shuttle, selecting needles of the appropriate length for the stator core to be wound, rethreading the coil wire through the newly installed needles and verifying that the correct coil wire tensioning has been achieved.

Such needle replacement or adjustment operations are both time consuming and require manual operator intervention, thereby reducing the overall productivity of the winding station.

Lead termination equipment located at the stator winding station, such as that described in commonly assigned U.S. Patent No. 4.997.138 may be used to anchor the lead wires extending from the stator coils to the stator terminal board or pallet. In presently known winding station configurations, this equipment is typically located at a fixed distance from the proximal face of the stator core. While it is not generally necessary to reposition this equipment when winding stator cores of different lengths, such capability may be desirable when changing lead anchoring conditions or when a different type of stator terminal board is used.

U.S. Patent 2954177 describes a machine for winding coils in slots of stator cores by means of a winding head. This machine uses a winding head which accomplishes reciprocation and oscillation paths to form the coils and to place them within the slots of the stator core. These paths are described as being adjustable.

In the solution presented by this document neither the frame for seating the stator, nor the winder have provision for obtaining relative motion between the stator core and the winder.

In view of the foregoing, it is an object of the present invention to provide apparatus for automatically adapting a stator winding station to wind stators of different lengths with a minimum of operator intervention.

It is a further object of this invention to provide apparatus for automatically adapting a stator winding station for winding stator cores of different lengths without changing or adjusting the needles installed in the winder.

It is a further object of this invention to provide apparatus for improving the overall productivity and cost-effectiveness of a stator core winding station by minimizing the down time associated with adjusting the winder for stator cores of different lengths.

It is yet another object of this invention to provide apparatus for automatically repositioning lead termination equipment, used with a stator core winding station capable of automatic setup, for different length stator cores.

### Summary Of The Invention

These objects of the invention are accomplished in accordance with the apparatus as claimed in claim 1, by adapting the stator winding station to wind stator cores of different lengths, without changing or adjusting the lengths of the needles installed in the winding shuttle, and with a minimum of operator intervention.

The present invention is described with reference to the automated stator core assembly line of commonly assigned U.S. patent No. 4 969 606, although it is to be understood that the invention could be practiced on presently known winding stations. The present invention includes the steps of translating the stator core, depending upon its length, to maintain the midpoint of the stator core length at a fixed distance from the winding machine. The apparatus of the present invention may comprise first and second locator devices capable of precision movement, wherein the first locator carries a stator housing, and the second locator carries lead termination equipment. The apparatus is intended to adapt automatically to stator cores of different lengths without adjusting or replacing the winding needles mounted in the winder shuttle.

The invention, its nature and various advantages, will be more apparent from the accompanying drawings and the following detailed description.

### Brief Description Of The Drawings

FIGS. 1A and 1B illustrate presently known methods by which a stator coil winding station is adapted to wind stator cores of different lengths.

FIGS. 2A and 2B illustrate the methods by which a coil winding station may be configured to automatically adapt to stator cores of different lengths.

FIG. 3 is a cross-sectional elevation view of a stator locator constructed in accordance with the principles of the present invention.

FIG. 4 is a front elevation view of the mechanism of FIG. 3 taken along the line 4--4.

FIG. 5 is a cross-sectional view of a lead termination equipment locator constructed in accordance with the principles of the present invention.

FIG. 6 is a front elevation view of the mechanism of FIG. 5 taken along the line 6--6.

### Detailed Description Of The Preferred Embodiments

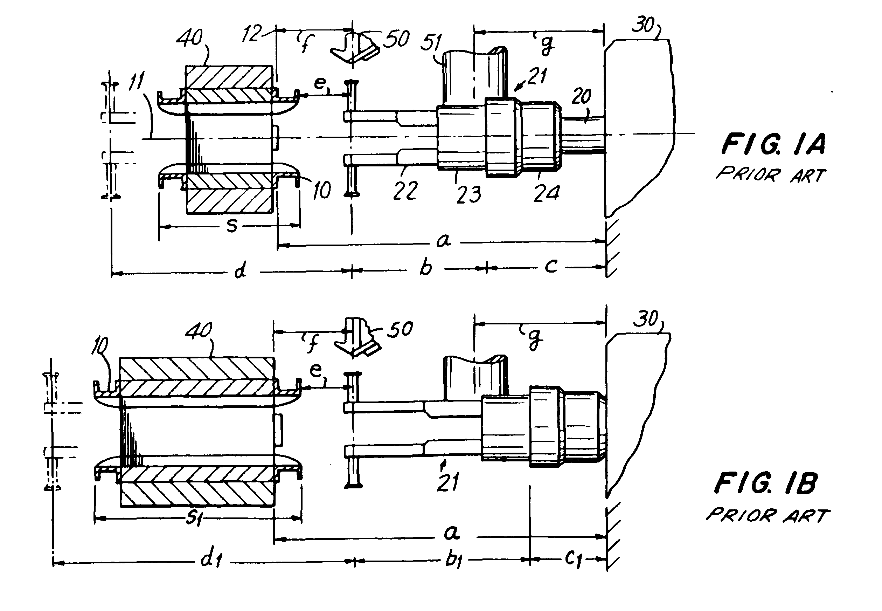

FIGS. 1A and 1B illustrate the methods by which a conventional stator coil winding apparatus is reconfigured to wind stator cores of different lengths. Stator 10 is positioned with its longitudinal axis 11 aligned with output shaft 20 of winding machine 30. Stator 10 is disposed in stator housing 40 so that reciprocatory movement by output shaft 20 translates needle assembly 21 along the longitudinal axis 11 of stator 10. Needle assembly 21 is comprised of needles 22, casing 23 and flange connection 24, which assembly is per se known. When needles 22 are adjacent and exterior to the stator endfaces, needle assembly 21 is rotated about its longitudinal axis to loop the coil wires extending therefrom onto the upper and lower poles of the stator core, as is also well known to those skilled in the art.

In a conventional winding station, the distance "a" between stator endface 12 nearest needle assembly 21 and a fixed reference frame, here winder 30, remains constant, regardless of stator core length "s." Comparing FIGS. 1A and 1B, it is seen that in such arrangements;. any additional length of the stator core is accommodated towards the left in FIG. 1B. Needle assembly 21 has predetermined length "b," comprising the length between the wire guide tips of needles 22 and the face of flange connection 24 closest to stator core 10.

Length "c" shown in FIGS. 1A and 1B corresponds to the distance between the face of flange 24 nearest the stator core and a fixed reference frame, for example winder 30, for predetermined needle stroke adjustment "d." Stroke length "d" is that necessary for needle assembly 21 to wind a given stator core of length "s." For a stator core of length "s" and predetermined stroke length "d," the distance "c" represents the end of the winder longitudinal stroke nearest the winder 30, while the wire guide tips of needle assembly 21 will extend to the position shown in phantom lines on the outward stroke of output shaft 20.

Again comparing FIGS. 1A and 1B, it is seen that when a stator of different length "s₁" is positioned at distance "a" from the fixed reference frame, needle assembly stroke length "d₁" is required. Consequently, the position of flange connection 24 on the inward stroke of output shaft 20 changes to "c₁" and the outermost position achieved by the wire guide tips of needle assembly 21 also varies, as shown in FIG. 1B.

From the foregoing, it is apparent that the longitudinal stroke of needle assembly 21 must be adjusted to achieve a constant distance "e" from the end of the stator coil support to the wire guide tips of needles 22, which distance is determined by the type of coil support that is applied to the stator stack. For a conventional winding machine, the stroke of output shaft 20 can be altered by keying a new stroke length into the winder numerical controls. However, a different stroke length "d₁", as shown in FIG. 1B, can be achieved only by replacing the original needles 22 with needles of suitable length "b₁." Alternatively, a mechanism could be developed which permits length "b" of needles 22 to be varied. However, both of these solutions would require the winding station operator to idle the winder for a considerable period while the proper length needles are selected and installed, or the needle lengths adjusted, precluding automatic set up of the winding station to accommodate stator cores of different lengths.

It is often desirable to employ stator coil lead termination equipment at the winding station to anchor the coil leads to the stator terminal board or housing 40, such as that described in commonly, assigned U.S. patent No. 4 997 138. The hook portion of lead termination equipment 50 and lead termination equipment support column 51 are shown in FIGS. 1A and 1B, respectively, at distance "f" from plane 12 of stator core 10, and distance "g" from the fixed reference frame. In a conventional winding station, it generally would not be necessary to reposition lead termination equipment 50 or support column 51 for stator cores of different lengths, since distances "f" and "g" would not vary. However, the capability to change these distances may be desirable when changing lead anchoring conditions or when a different type of stator terminal board is mounted on the stator core.

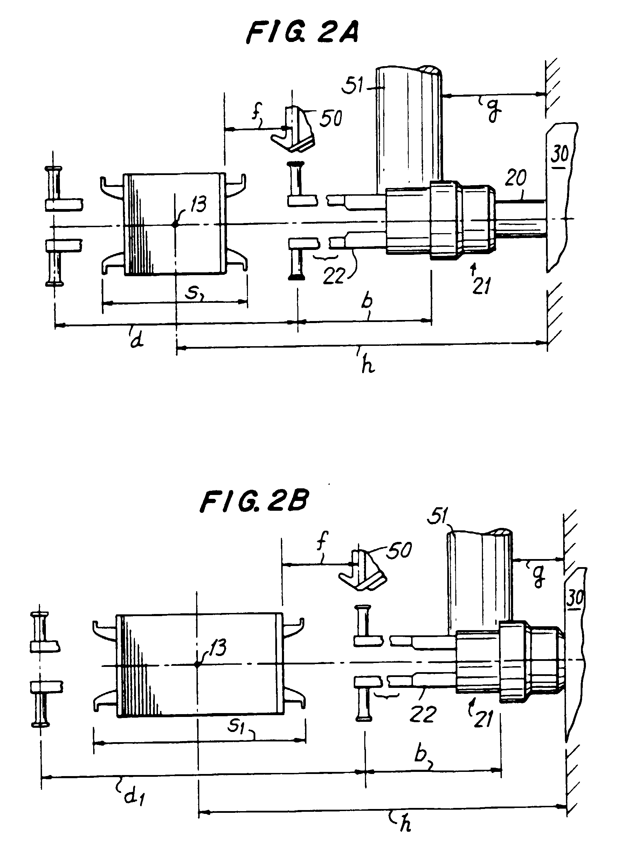

Referring now to FIGS. 2A and 2B, the present invention is described. In accordance with the principles of this invention, midpoint 13 of longitudinal axis 11 of stator core 10 is positioned at fixed distance "h" from the fixed reference frame, independent of the stator core length "s" or "s₁." Point 13 represents the midpoint of all possible needle assembly stroke lengths "d" for a given needle length "b," making it possible to use the same needles 22 for different length stator cores. The present invention therefore obviates the need to replace or adjust the length of needles 22. It is of course understood that in order to practice the present invention, needles 22 having a length suitable for winding the largest stator core to be wound must be installed in winder 30.

In view of the foregoing method for accomplishing the winding of different length stator cores using needles 22 of a single constant length, it is a further part of the present invention to automatically obtain the desired spacing "f" between lead termination equipment 50 and endface 12 of stator core 10. This is achieved by adjusting distance "g" between lead termination equipment support column 51 and the fixed reference frame using an apparatus hereinafter described.

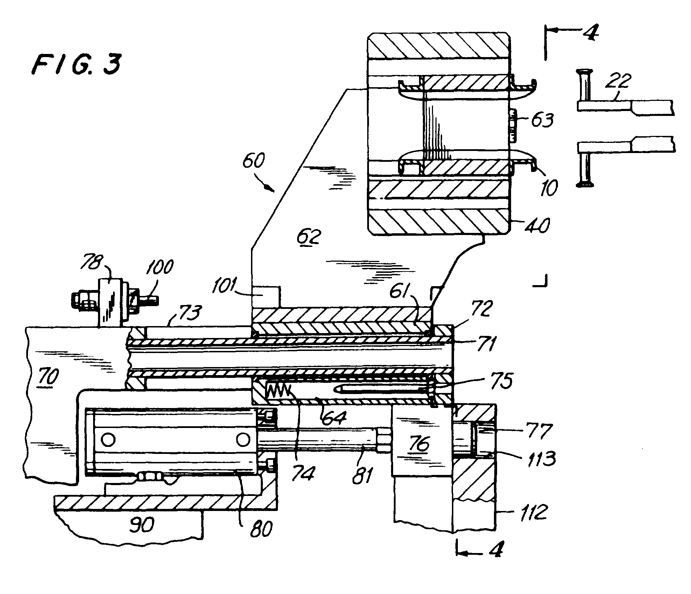

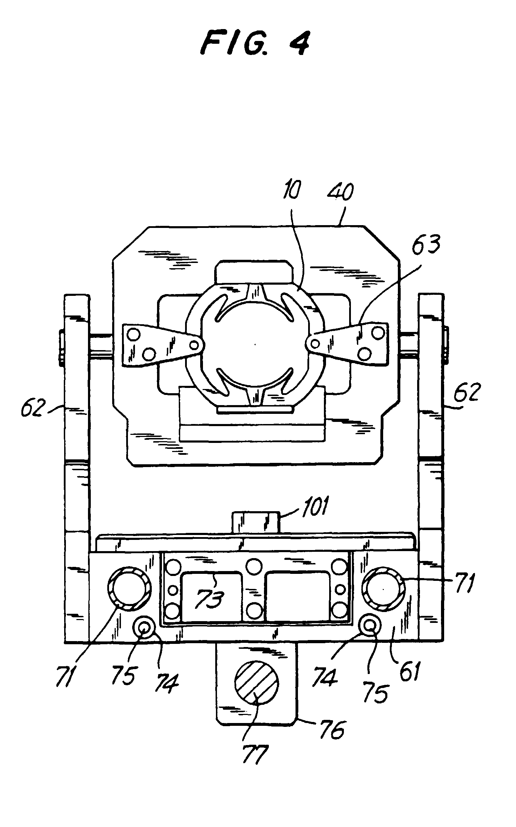

FIGS. 3 and 4 show stator locator 60, for positioning stator core 10 relative to winder 30 in accordance with the foregoing principles. Stator locator 60 is mounted atop support frame 70, such as the turret assembly described in commonly assigned U.S. patent No. 4.969.606. Stator locator 60 comprises slide block 61 slidably disposed on guide bars 71. A pair of vertically disposed stator housing support members 62 are fixed to the lateral edges of slide block 61. Guide bars 71 are fixed at one end to support frame 70, and at the other end to stop block 72. Support arm 73 is disposed between guide bars 71, and is fixed at one end to support frame 70 and at the other end to stop block 72. Stator housing 40, such as that described in U.S. patent No. 4.969.606, is rotatably disposed between housing support members 62 for holding stator core 10. Stator housing 40 has two plates 63 which define a reference plane for endface 12 of stator core 10 nearest winder 30.

Slide block 61 has two blind bores 64 containing springs 74. Springs 74 are fixed at one end to the blind end of bores 64, while the free ends are disposed around guide pins 75 projecting into bores 64 from stop block 72. Guide pins 75 are intended to guide the coils of springs 74 when the springs are compressed.

Pneumatic cylinder 80 is mounted to winder support plate 90 so that its piston 81 abuts against push block 76. Push block 76 depends from the lower surface of slide block 61 and transmits the translation of piston 81 of cylinder 80 to stator housing 40. Push block 76 has knob 77 projecting from its front surface, which knob is intended to increase the rigidity of stator locator 60 when it is engaged in an adjustably locatable bore in the lead termination locator 110 described hereinafter.

Shock absorber 100 is mounted in mounting block 78 disposed from support frame 70 at a centrally located position behind slide block 61. Shock absorber 100 cooperates with stop block 101, which is fixedly connected to the upper surface of slide block 61, to arrest the rearward movement of slide block 61 which occurs when the pressure is released from pneumatic cylinder 80.

In operation, stator core 10 is placed in stator housing 40 so that its end nearest winder 30 abuts against stop plates 63. This reference plane remains the same for all stator cores which are positioned in stator housing 40, independent of the stator core length. Any variation in length of stator core 10 is accommodated by the additional space provided for this purpose at the left of stator housing 40, as seen in FIG. 3. Once stator core 10 has been secured in stator housing 40, pneumatic cylinder 80 is actuated, causing its piston 81 to urge push block 76 and the attached structure, including stator housing 40, along guide bars 71. In this manner, stator housing 40 can be moved along guide bars 71 until midpoint 13 of stator core 10 coincides with preselected distance "h" for a given length of winding needles 22.

Lead termination equipment locator 110, described below, includes an adjustably locatable abutment plate 112 having bore 113. Abutment plate 112 limits further progress of slide block 61 along guide bars 71 once midpoint 13 of stator core 10 coincides with preselected distance "h." When push block 76 abuts against abutment plate 112 of lead termination equipment locator 110, knob 77 engages bore 113, thereby increasing the rigidity of stator locator 60. The additional rigidity imparted by this scheme improves the precision of the alignment between the respective locators 60 and 110, and further minimizes undesirable vibration of stator locator 60 at higher winding speeds.

During translation of slide block 61 caused by pneumatic cylinder 80, springs 74 disposed In bores 64 are compressed, with the turns of springs 74 guided by guide pins 75. When the winding operation is completed and the coil leads terminated, the pressure in pneumatic cylinder 80 is released. Discharge of cylinder 80 permits springs 74 to expand so that slide block 61 and the associated structure translates away from the winder along guide bars 71. This backward motion is arrested by stop block 101 impacting against shock absorber 100.

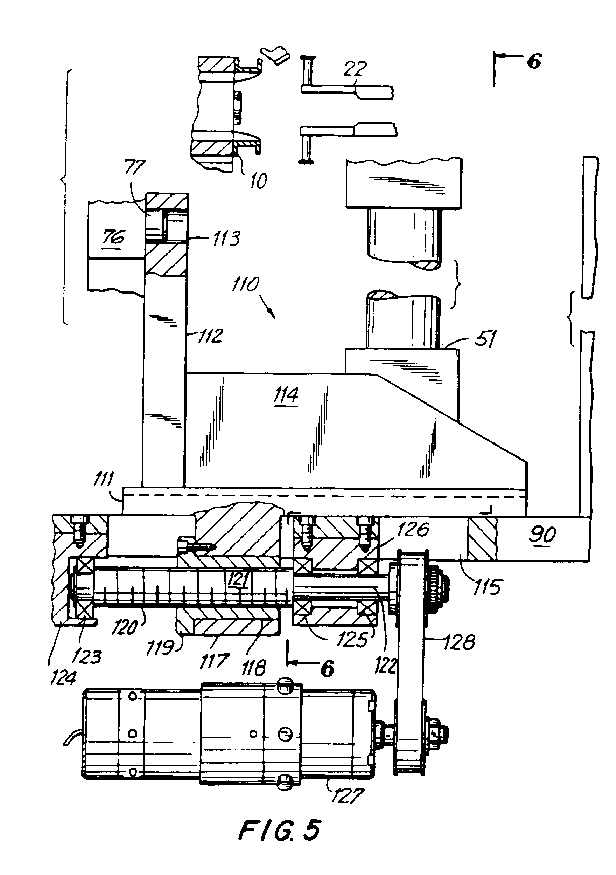

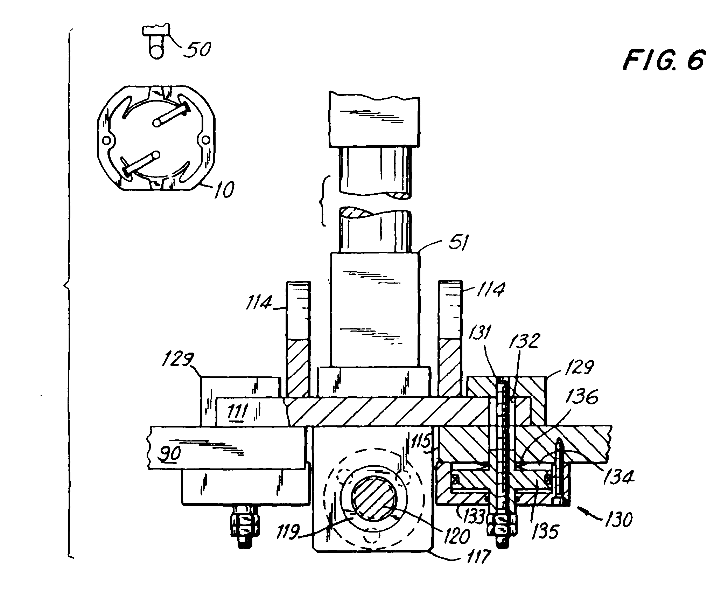

Referring to FIGS. 5 and 6, lead termination equipment locator 110 of the present invention is described. Lead termination equipment locator 110 comprises base plate 111 which carries lead termination equipment support column 51 and stator locator abutment plate 112. Abutment plate 112 has bore 113 in its upper face for engaging knob 77 of stator locator 60, and is buttressed by two support plates 114.

Base plate 111 has block 117 integrally formed from its lower surface. Block 117 passes through slot 115 of winder support plate 90 for engagement with a drive assembly for translating lead termination equipment locator 110. Block 117 has bore 118 carrying threaded sleeve 119, which sleeve is fastened to block 117 by conventional means.

Threaded bar 120 has threaded portion 121 engaged with threaded sleeve 119, and smooth portion 122. One end of threaded bar 120 is supported in bearing 123. Bearing 123 is mounted in bearing block 124, which is in turn affixed to winder support plate 90. The smooth portion 122 of threaded bar 120 is supported in bearings 125. Bearings 125 are mounted in bearing mounting block 126, which is also affixed to winder support plate 90.

Motor 127, attached to winder support plate 90 by conventional means (not shown), rotatingly drives threaded bar 120 via belt transmission 128, thereby causing base plate 111 and its associated structure to translate parallel to the longitudinal axis of winder 30. The controls for motor 127 are connected to those of winder 30 so that lead terminating equipment 50 can be moved to the proper spacing "f" when stator locator 60 is translated for different stator lengths.

Lead terminator locator 110 includes L-shaped guide bars 129 to guide the translation of base plate 111 on winder support plate 90 and to increase the rigidity of support column 51 during winding. For these purposes, L-shaped guide bars 129 overlap the edges of base plate 111, to guide and selectively clamp base plate 111 as it slides along winder support plate 90. Guide bars 129 are connected to pneumatic actuators 130 by bolts 131 which pass through longitudinal slots 132 in base plate 111. This configuration selectively permits either sliding movement of base plate 111 along winder support plate 90, or clamping base plate 111 at-a given position.

Actuators 130 are comprised of means 133 forming sealed cavities 134 fastened to the underside of winder support plate 90. Piston 135 is disposed in sealed cavity 134, where the piston is engaged with the threads on the lower portion of bolt 131. Cup springs 136 mounted between pistons 135 and the underside of winder support plate 90 bias pistons 135 away from winder support plate 90. Pneumatic fittings (not shown) are attached to means 133, for introducing pressurized air from a conventional air supply (not shown).

In operation;- pressurized air is introduced into sealed cavities 134 through suitable pneumatic fittings, thereby forcing pistons 135 upward against the bias of cup springs 136. As pistons 135 rise in sealed cavities 134, they push bolts 131 and attached guide bars 129 upward, freeing base plate 111. Motor 128 is then actuated to translate base plate 111 via threaded bar 120, so that lead termination equipment 50 can be positioned at the desired spacing "f" for the selected stator locator position: Additional equipment, forming a part of lead termination equipment 50 (not shown), may be employed to impart further translation to the lead termination equipment where a change in the spacing "f" is desired, for example, for a different stator terminal board configuration.

Once lead termination equipment 50 has been translated to the desired location, the pressure in sealed cavities 134 is released, so that cup springs 136 cause guide bars 129 to clamp base plate 111 downward against winder support plate 90. It is contemplated that each guide bar 129 will require at least two actuators 130 to provide even and adequate lifting and compressive forces.

## Claims

1. Apparatus for automated winding of coils on stator cores (10) having different lengths (s,s1) and two end faces (12) using a winder (21) having a longitudinal axis (11) and supporting a winding needle (22) defining a longitudinal adjustable stroke length (d,d1) to suit the different lengths (s,s1) of said stator cores (10) and having a midpoint (13), wherein said apparatus comprises:
a stator housing for aligning said stator cores (10) with said longitudinal axis (11) of said winder (21);
means for adjusting the length of said needle stroke to suit the different lengths of said stator cores (10) which need to be wound;
means for operating said winder (21) to dispose coils on said stator cores (21), the apparatus being characterised in that it further comprises:
a winding needle of fixed length, and
means (60) for translating said stator housing relative to said winder (21) parallel to said longitudinal axis (11) of said stator cores so that for stator cores of different lengths said midpoint (13) of said adjustable needle stroke length (d,d1) coincides with the midpoint of each of said stator cores during winding of the coils.

2. The apparatus of claim 1 further comprising means (110) for translating lead termination equipment (50) parallel to said longitudinal axis (11) of said winder (21) to achieve a preselected spacing (f) between said lead termination equipment (50) and one of said end faces (12) of said stator cores (10).

3. The apparatus of claim 1 wherein said means for translating said stator housing further comprises:
a support frame (70) having a lateral face;
guide means (71) projecting from said lateral face of said support frame (70) said guide means (71) being parallel with said longitudinal axis (11) of said winder (21);
a slide block (61) slideably engaged with said guide means (71);
a stator housing support member (62) vertically disposed from said block (61) for mounting said stator housing (40); and
means (80) for translating said slide block (61) from a first position away from said winder (21) to a second position where the midpoint of each of said stator cores coincides with the midpoint (13) of said adjustable needle stroke length (d,dl).

4. The apparatus of claim 3 wherein said means (110) for translating said lead termination equipment (50) comprises:
a support plate (90) having a slot (115);
a base plate (111) for carrying said lead termination equipment (50), said base plate (111) having an underside;
a threaded block (117) mounted on said underside of said base plate (111), said threaded block (117) disposed through said slot (115) in said support plate (90);
a threaded bar (120) rotatably engaged in said threaded block (117); and
means (127) for rotating said threaded bar (120), so that said base plate (111) is translated relative to said support plate (90) from a first position away from one of said end faces (12) of said stator core to a second position wherein said lead termination equipment achieves said preselected spacing (f) between said lead termination equipment (50) and said one of said end faces (12).

## Patentansprüche

1. Vorrichtung zum automatischen Wickeln von Spulen auf Statorkernen (10), die unterschiedliche Längen (s, s1) und zwei Stirnflächen (12) aufweisen, wobei ein Wickler (21) verwendet wird, der eine Längsachse (11) aufweist und eine Wickelnadel (22) trägt, die eine in Längsrichtung einstellbare Hublänge (d, d1) definiert, um sich an die unterschiedlichen Längen (s, s1) der Statorkerne (10) anzupassen, und die einen Mittelpunkt (13) aufweist, wobei die Vorrichtung umfaßt:
ein Statorgehäuse zum Ausrichten der Statorkerne (10) nach der Längsachse (11) des Wicklers (21);
Mittel zum Einstellen der Länge des Nadelhubs, um ihn an die unterschiedlichen Längen der Statorkerne (10), die zu wickeln sind, anzupassen;
Mittel zum Betreiben des Wicklers (21), um Spulen auf den Statorkernen (21) anzuordnen, wobei die Vorrichtung dadurch gekennzeichnet ist, daß sie des weiteren umfaßt:
eine Wickelnadel mit feststehender Länge; und
Mittel (60) zum Verschieben des Statorgehäuses relativ zum Wickler (21), parallel zur Längsachse (11) der Statorkerne, so daß für Statorkerne von unterschiedlichen Längen der Mittelpunkt (13) der einstellbaren Nadelhublänge (d, d1) mit dem Mittelpunkt jedes der Statorkerne während des Wickelns der Spulen übereinstimmt.

2. Vorrichtung nach Anspruch 1, des weiteren umfassend Mittel (110) zum Verschieben einer Drahtanschlußeinrichtung (50) parallel zur Längsachse (11) des Wicklers (21), um einen vorbestimmten Abstand (f) zwischen der Drahtanschlußeinrichtung (50) und einer der Stirnseiten (12) der Statorkerne (10) zu erreichen.

3. Vorrichtung nach Anspruch 1, wobei das Mittel zum Verschieben des Statorgehäuses des weiteren umfaßt:
einen Tragrahmen (70), der eine Seitenfläche aufweist;
Führungsmittel (71), die von der Seitenfläche des Tragrahmens (70) herausragen, wobei die Führungsmittel (71) parallel zu der Längsachse (11) des Wicklers (21) verlaufen;
einen Gleitblock (61), der verschiebbar mit den Führungsmitteln (71) in Eingriff steht;
ein Stützelement (62) für Statorgehäuse, das vertikal von dem Gleitblock (61) angeordnet ist, um das Statorgehäuse (40) zu befestigen; und
Mittel (80) zum Verschieben des Gleitblocks (61) von einer ersten Position weg vom Wickler (21) in eine zweite Position, in welcher der Mittelpunkt von jedem der Statorkerne mit dem Mittelpunkt (13) der einstellbaren Nadelhublänge (d, dl) übereinstimmt.

4. Vorrichtung nach Anspruch 3, wobei die Mittel (110) zum Verschieben der Drahtanschlußeinrichtung (50) umfassen:
eine Stützplatte (90), die einen Schlitz (115) aufweist;
eine Grundplatte (111) zum Tragen der Drahtanschlußeinrichtung (50), wobei die Grundplatte (111) eine Unterseite aufweist;
einen mit Gewinde versehenen Block (117), der an der Unterseite der Grundplatte (111) befestigt ist, wobei der mit Gewinde versehene Block (117) sich durch den Schlitz (115) in der Stützplatte (90) hindurch erstreckt;
eine im Gewinde versehene Stange (120), die sich drehbar mit dem mit Gewinde versehenen Block (117) in Eingriff befindet; und
Mittel (127) zum Drehen der mit Gewinde versehenen Stange (120), so daß die Grundplatte (111) relativ zur Stützplatte (90) von einer ersten Position, die von einer der beiden Stirnseiten (12) des Statorkerns entfernt liegt, zu einer zweiten Position verschoben wird, an der die Drahtanschlußeinrichtung den vorbestimmten Abstand (f) zwischen der Drahtanschlußeinrichtung (50) und einer der Stirnseiten (12) erreicht.

## Revendications

1. Machine pour le bobinage automatisé d'enroulements sur des noyaux de stators (10) ayant différentes longueurs (s, s1) et deux faces d'extrémité (12), en utilisant une bobineuse (21) ayant un axe longitudinal (11) et qui supporte une aiguille de bobinage (22) , laquelle définit une longueur de course longitudinale réglable (d, dl) pour s'adapter aux différentes longueurs (s, sl) des noyaux de stators (10), et ayant un point milieu (13), ladite machine comprenant : un carter de stator permettant d'aligner les noyaux de stators (10) sur l'axe longitudinal (11) de la bobineuse (21) ;
des moyens servant à régler la course de l'aiguille pour l'adapter aux différentes longueurs des noyaux de stator (10) qui doivent être bobinés ;
des moyens servant à mettre la bobineuse (21) en action pour disposer des enroulements sur les noyaux de stators (10), ladite machine étant caractérisée en ce qu'elle comprend en outre :
une aiguille de longueur fixée ; et
des moyens (60) servant à déplacer le carter de stator par rapport à la bobineuse (21) parallèlement à l'axe longitudinal (11) desdits noyaux de stators de manière que, pour des noyaux de stators de longueurs différentes, le point milieu (13) de la longueur réglable (d, dl) de la course de l'aiguille coïncide avec le point milieu de chacun desdits noyaux de stators pendant le bobinage des enroulements.

2. Machine selon la revendication 1, comprenant en outre des moyens (110) servant à déplacer un équipement (50) de terminaison des conducteurs en translation parallèlement à l'axe longitudinal (11) de la bobineuse (21) pour ménager un espacement (f) choisi à l'avance entre ledit équipement (50) de terminaison des conducteurs et l'une des faces d'extrémité (12) desdits noyaux de stators (10).

3. Machine selon la revendication 1, dans laquelle les moyens servant à déplacer le carter de stator en translation comprennent en outre :
un châssis support (70) ayant une face latérale ;
des moyens de guidage (71) qui dépassent de la face latérale dudit châssis support (70), lesdits moyens de guidage (71) étant parallèles à l'axe longitudinal (11) de la bobineuse (21) ;
un bloc coulissant (61) en prise coulissante avec les moyens de guidage (71) ;
un élément (62) de support du carter de stator, disposé verticalement sur ledit bloc (61) pour le montage dudit carter de stator (40) ; et
des moyens (80) servant à déplacer ledit bloc coulissant (61) en translation d'une première position éloignée de la bobineuse (21) à une deuxième position dans laquelle le point milieu de chacun des noyaux de stators coïncide avec le point milieu (13) de la longueur de course d'aiguille réglable (d, dl).

4. Machine selon la revendication 3, dans laquelle les moyens (110) servant à déplacer l'équipement (50) de terminaison des conducteurs comprennent :
une plaque support (90) ayant une fente (115) ;
une plaque de base (111) destinée à supporter l'équipement (50) de terminaison des conducteurs, ladite plaque de base (111) ayant une face inférieure ;
un bloc fileté (117) monté sur la face inférieure de ladite plaque de base (111), ledit bloc fileté (117) passant dans la fente (115) de ladite plaque support (90) ;
une barre filetée (120) montée mobile en rotation dans ledit bloc fileté (117) ; et
des moyens (127) servant à faire tourner ladite barre filetée (120) de telle manière que la plaque de base (111) soit déplacée en translation par rapport à la plaque support (90) d'une première position éloignée d'une des faces d'extrémité (12) du noyau de stator à une deuxième position dans laquelle l'équipement de terminaison des conducteurs prend un espacement (f) choisi à l'avance entre ledit équipement (50) de terminaison de conducteurs et une des faces d'extrémité (12).
